# FASCICULE DE BREVET EUROPEEN

(11) **EP 3 880 972 B1**
(45) Date de publication et mention de la délivrance du brevet: **09.08.2023**
(21) Numéro de dépôt: 19842384.0
(22) Date de dépôt: 04.12.2019
(51) Int. Cl.: F04D 29/56, F04D 29/54, F01D 17/16, F01D 5/14, F01D 9/04

(54) **ROUE AUBAGÉE DE MASQUAGE POUR RÉDUIRE LA SIGNATURE RADAR D'UNE ROUE MOBILE DE COMPRESSEUR DE TURBOREACTEUR**
ABSCHIRMSCHAUFELRAD ZUR REDUZIERUNG DER RADARSIGNATUR EINES VERDICHTERRADES EINES GASTURBINENTRIEBWERKS
SHIELDING BLADED WHEEL FOR REDUCING RADAR SIGNATURE OF A COMPRESSOR ROTOR WHEEL OF A GAS TURBINE ENGINE

(30) Priorité: 20.12.2018 FR 1873465
(43) Date de publication de la demande: 22.09.2021
(73) Titulaire: SAFRAN AIRCRAFT ENGINES, 75015 Paris (FR)
(72) Inventeur: DUMAS, Michel, 77550 Moissy-Cramayel (FR); VILLAINES, Laurent, Christophe, Francis, 77550 Moissy-Cramayel (FR)
(74) Mandataire: Brevalex
(86) Numéro de dépôt international: PCT/FR2019/052918
(87) Numéro de publication internationale: WO 2020/128201

(56) Documents cités:
- RU-C1- 2 623 031
- US-A1- 2006 254 271
- US-A1- 2015 361 819
- US-A1- 2017 058 691
- US-A1- 2018 291 753

## Description

### DOMAINE TECHNIQUE

L'invention concerne un moteur de type turboréacteur équipé de moyens réduisant sa signature radar et/ou sonore.

### ÉTAT DE LA TECHNIQUE ANTÉRIEURE

Un radar est un émetteur d'ondes électromagnétiques comportant un récepteur pour détecter si une partie des ondes qu'il émet sont ou ne sont pas réfléchies par un objet ou obstacle présent dans la région d'émission de ces ondes.

Dans le cas d'un aéronef dit furtif, les éléments externes de cet aéronef sont traités pour limiter la réflexion des ondes électromagnétiques, de façon à le rendre le plus faiblement détectable par radar.

Lorsque cet aéronef est équipé d'un système de propulsion de type turboréacteur, l'air est admis dans une manche d'entrée pour traverser en premier lieu un compresseur basse pression comportant une série de pales rotatives avant de se scinder en un flux primaire central et un flux secondaire entourant le flux primaire.

Les éléments rotatifs de ce turboréacteur constituent en soi une source de détection, du fait qu'ils réfléchissent les ondes radars, et contribuent par là même à rendre l'aéronef détectable.

Une possibilité pour limiter la détection par radar du compresseur basse pression est de couder la manche d'entrée, pour que les ondes radar incidentes soient déviées par réflexion sur les parois inclinées de la manche durant leur progression dans celle-ci. Ces ondes ont ainsi une incidence oblique sur les éléments de rotor du moteur, de sorte qu'elles sont diffusées par ceux-ci pour être faiblement réfléchies vers l'entrée de la manche.

En pratique, cette solution reste insuffisante, et le niveau de détection par radar du compresseur basse pression d'un turboréacteur est encore trop important. Le document US 2006/254271 A1 divulgue une roue aubagée de masquage d'une roue mobile de turboréacteur selon l'art antérieur.

Dans ce cadre, l'objet de l'invention est d'apporter une solution permettant de diminuer le niveau de détection par radar des éléments de rotor d'un compresseur basse pression de turboréacteur.

### EXPOSÉ DE L'INVENTION

A cet effet, l'invention a pour objet une roue aubagée de masquage d'une roue mobile de turboréacteur selon la revendication 1, comportant des pales, chaque pale comportant une paroi d'intrados et une paroi d'extrados réunies au niveau d'un bord d'attaque et au niveau d'un bord de fuite et s'étendant selon un axe d'envergure depuis un pied jusqu'à un sommet, et dans laquelle :
- la paroi d'intrados comporte une portion amont s'étendant du bord d'attaque à une zone convexe de cette paroi d'intrados, une portion centrale s'étendant de la zone convexe à une zone concave de cette paroi d'intrados, et une portion aval s'étendant de la zone concave au bord de fuite ;
- la paroi d'extrados comporte une portion amont s'étendant du bord d'attaque à une zone concave de cette paroi d'extrados, une portion centrale s'étendant de la zone concave à une zone convexe de cette paroi d'extrados, et une portion aval s'étendant de la zone convexe au bord de fuite ;
- ces zones concaves et ces zones convexes s'étendent chacune sur la majorité de la hauteur de la pale le long de son axe d'envergure ;
- la zone concave de la paroi d'intrados est en vis-à-vis de la zone convexe de la paroi d'extrados, et la zone concave de la paroi d'extrados est en vis-à-vis de la zone convexe de la paroi d'intrados.

Avec cet agencement, les ondes magnétiques entrantes traversant la roue sont déviées pour avoir une incidence oblique sur la roue du compresseur basse pression de manière à être faiblement réfléchies par celui-ci.

Chaque pale est montée sur la roue aubagée de manière à pouvoir pivoter autour d'un axe radial coïncidant avec son bord d'attaque afin de modifier son angle de calage, et la roue aubagée est équipée de moyens de commande qui pilotent le calage des pales.

L'invention concerne également une roue aubagée ainsi définie, dans laquelle les pales sont couvertes d'un revêtement absorbant les rayonnements électromagnétiques.

L'invention concerne également un turbocompresseur comprenant un compresseur basse pression incluant une roue mobile en amont de laquelle est agencée une roue directrice d'entrée en amont de laquelle est montée une roue aubagée ainsi définie.

L'invention concerne également un turbocompresseur comprenant un compresseur basse pression incluant une roue mobile en amont de laquelle est agencée une roue aubagée ainsi définie.

### BRÈVE DESCRIPTION DES DESSINS

La figure 1 est une vue schématique en perspective d'une portion de la roue de masquage selon l'invention ;
La figure 2 est une représentation schématique montrant deux pales consécutives selon l'invention en vue de dessus ;
La figure 3 est une vue en coupe selon un plan orthoradial d'une pale selon l'invention ;
La figure 4 est une représentation en perspective d'une pale selon l'invention ;
La figure 5 est une représentation schématique montrant deux pales de masquage consécutives à calage variable conformément à l'invention ;
La figure 6 est une représentation schématique en coupe longitudinale d'une architecture de système de propulsion comprenant une manche d'entrée coudée débouchant dans un turboréacteur ;
La figure 7 est une vue schématique en coupe longitudinale d'une portion d'entrée de turboréacteur équipée d'une roue de masquage selon l'invention agencée en amont d'une roue directrice d'entrée elle-même en amont du compresseur basse pression ;
La figure 8 est une vue schématique en coupe longitudinale d'une portion d'entrée d'un moteur équipée d'une roue de masquage selon l'invention agencée directement en amont du compresseur basse pression ;
La figure 9 est une représentation schématique montrant deux pales de masquage consécutives ayant chacune un volet aval à calage variable selon une variante ne faisant pas partie de l'invention.

### EXPOSÉ DÉTAILLÉ DE MODES DE RÉALISATION PARTICULIERS

L'idée à la base de l'invention est de prévoir entre l'entrée d'air et le compresseur basse pression, une roue portant des pales fixes agencées pour masquer géométriquement le rotor de compresseur situé à leur aval.

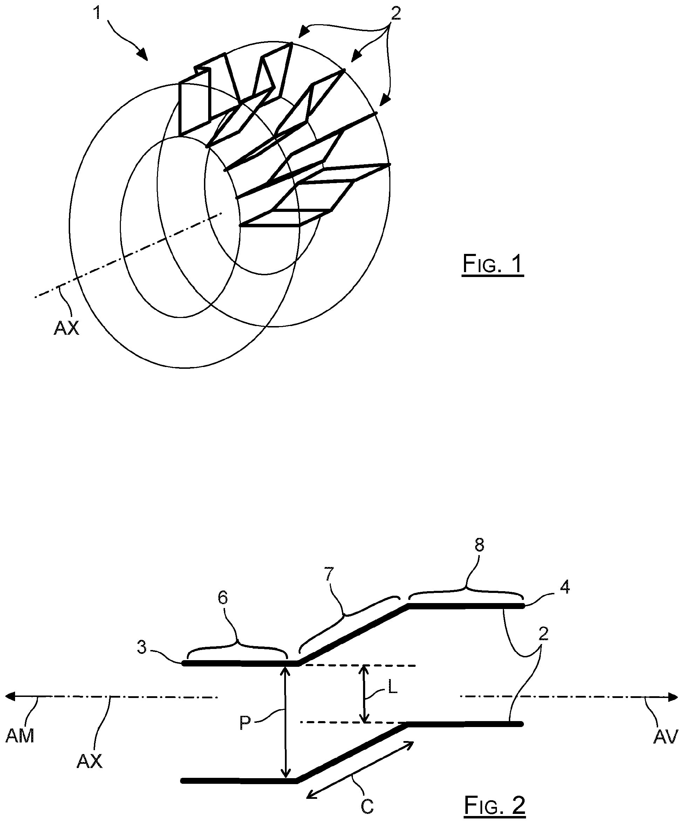

Comme représenté schématiquement sur la figure 1 cette roue de masquage 1 porte des pales de masquage fixes 2 régulièrement réparties le long de sa circonférence, et dont les formes sont agencées pour délimiter entre elles des canaux inter-pales en formes de chicanes pour offrir des angles de réflexion aux rayonnements électromagnétiques qui la traversent afin de les dévier.

Comme visible sur la figure 2, chaque pale 2 s'étend entre un bord d'attaque 3 et un bord de fuite 4 orientés l'un et l'autre parallèlement à un axe d'envergure de la pale qui est est un axe s'étendant radialement par rapport à un axe longitudinal AX du moteur lorsque la pale est montée. Cette pale 2 comporte une portion axiale amont 6 prolongée par une portion oblique centrale 7 elle-même prolongée par une portion aval 8 axiale. L'amont repéré par AM, et l'aval repéré par AV sur les figures sont définis par rapport au sens de circulation du flux d'air dans le moteur, c'est-à-dire le long de la direction longitudinale AX du turboréacteur, conformément aux conventions usuelles.

La portion axiale amont 6 s'étend selon la direction longitudinale, c'est-à-dire approximativement selon un plan contenant l'axe longitudinal AX du moteur, à environ 10° d'inclinaison près. La portion centrale a quant à elle une orientation oblique, ce qui signifie qu'elle est inclinée par rapport à l'axe AX. La portion aval 8 est décalée par rapport à la portion amont autour de l'axe AX, tout en s'étendant approximativement longitudinalement, c'est-à-dire que cette portion aval s'étend selon un autre plan passant par l'axe longitudinal AX, à environ 10° d'inclinaison près.

Les portions amont, centrale, et aval sont représentées symboliquement par des parois planes dans les figures 1, 2, 5 et 9, pour simplifier la compréhension. En pratique, chaque pale 2 a une forme incurvée pouvant être décomposée en des portions amont, centrale, et aval de par leurs fonctionnalités vis-à-vis de l'écoulement fluide et de la déviation électromagnétique.

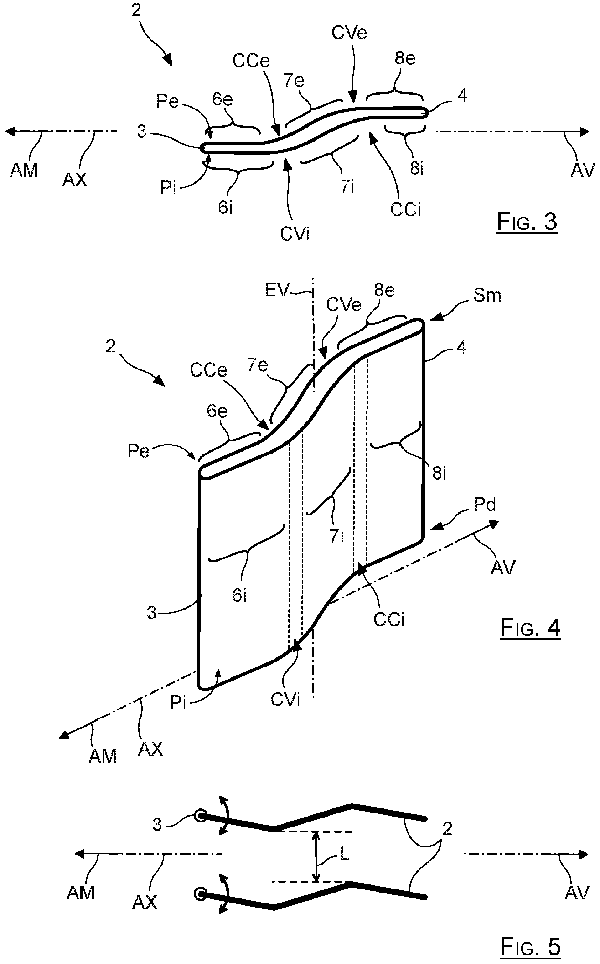

Un exemple de pale 2 selon l'invention ayant une forme incurvée est représenté sur les figures 3 et 4. Cette pale 2 comporte une paroi d'extrados Pe et une paroi d'intrados Pi incurvées reliant chacune son bord d'attaque 3 à son bord de fuite 4 en étant latéralement espacées l'une de l'autre, et en s'étendant chacune depuis un pied Pd jusqu'à un sommet Sm. Le pied Pd correspond à la partie par laquelle cette pale est raccordée ou fixée à une virole interne de la roue 1, et son sommet Sm correspond à la partie par laquelle elle est fixée à un carter externe de cette roue 1.

La paroi d'extrados Pe comporte depuis le bord d'attaque 3 jusqu'au bord de fuite 4 une portion amont 6e axiale suivie d'une zone concave CCe suivie d'une portion centrale 7e inclinée suivie d'une zone convexe CVe suivie d'une portion aval 8e axiale terminée au niveau du bord de fuite. Ces zones et ces portions s'étendent sur la majorité de la hauteur de la pale, c'est-à-dire sa longueur depuis son pied Pd jusqu'à son sommet Sm mesurée selon l'axe d'envergure EV de cette pale.

La paroi d'intrados Pi comporte depuis le bord d'attaque 3 jusqu'au bord de fuite 4 une portion amont 6i axiale suivie d'une zone convexe CVi suivie d'une portion centrale 7i inclinée suivie d'une zone concave CCi suivie d'une portion aval 8i axiale terminée par le bord de fuite 4. Ces zones et ces portions s'étendent sur la majorité de la hauteur de la pale mesurée selon son axe d'envergure EV.

Chaque portion centrale 7e et 7i s'étend entre une zone convexe et une zone concave, de sorte que les deux portions centrales 7e et 7i comportent chacune une inversion de courbure.

Comme illustré sur la figure 2, deux pales de masquage 2 consécutives délimitent entre elles un canal de passage inter-pales du fluide qui constitue une chicane entre les deux portions centrales obliques 7 inclinées par rapport à l'axe AX.

D'une manière générale, ce canal peut être caractérisé par son coefficient de masquage et par son pas relatif qui sont représentatifs de sa géométrie.

Ce canal présente ainsi un pas noté P qui est la distance séparant deux pales 2 consécutives en vue de dessus, c'est-à-dire le long de la circonférence de la roue 1, et qui correspond approximativement au rapport du périmètre de la roue sur son nombre de pales. Ce canal présente également une largeur apparente L, correspondant à la plus faible distance apparente entre deux pales consécutives lorsque la roue est vue de face c'est-à-dire selon l'axe AX.

Le coefficient de masquage du canal ou bien de la roue 1, à savoir le rapport L/P, correspond ainsi à la proportion d'aubages de la roue de compresseur située en aval de la roue de masquage 1, qui est visible à travers les pales de cette roue 1. Autrement dit, pour un radar situé dans l'axe AX, face à la roue 1, la proportion d'ondes émises pouvant être réfléchies par les aubages du compresseur est au maximum de L/P. Le coefficient de masquage effectif est d'autant plus bas que l'orientation du radar est inclinée par rapport à l'axe AX.

Le pas relatif du canal inter-pales correspond au rapport du pas P sur la longueur de corde notée C de la portion oblique 7, à savoir P/C, et il conditionne principalement l'aérodynamique du canal.

La portion oblique centrale 7 de la pale 2 est celle qui assure le masquage : c'est son inclinaison et sa longueur qui conditionnent le coefficient L/P, c'est-à-dire la proportion d'ondes électromagnétiques incidentes qui sont déviées en étant réfléchies par cette portion oblique centrale 7 lorsqu'elles traversent la roue 1.

La portion axiale amont 6 est dédiée au redressement du flux entrant qui peut être perturbé notamment par son parcours dans la manche d'entrée coudée. Le fait de guider ce flux dans la portion axiale amont du canal permet de le redresser et d'obtenir un écoulement limitant l'augmentation d'entropie (limitation des pertes par frottement et cisaillement), afin d'éviter une chute du débit d'air traversant le moteur. Ces portions axiales amont procurent ainsi au système une robustesse par rapport aux distorsions d'écoulement du flux d'air entrant.

La portion axiale amont 6 est d'autant plus longue que le le flux incident est susceptible d'être perturbé : en cas de flux non perturbé, cette portion axiale amont 6 pourrait avoir une longueur très faible, voire nulle pour être inexistante.

La portion axiale aval 8 est quant à elle dédiée au redressement du flux en sortie de la portion oblique centrale : le passage du flux à travers la portion oblique centrale engendre une giration de ce flux. La réduction de cette giration (redressement de flux ou dévrillage) par la portion axiale aval 8 permet d'assurer une alimentation optimale des étages de compression à traverser. En pratique, la giration du flux correspond à un écoulement dont les lignes de courant ont des formes hélicoïdales autour de l'axe AX, par opposition à des lignes de courant rectilignes parallèles à l'axe AX dans le cas d'un flux redressé.

La portion axiale aval 8 est ainsi d'autant plus longue que le flux doit être redressé pour alimenter le compresseur, de sorte que cette longueur peut être très faible voire nulle dans le cas où le compresseur présenterait une robustesse élevée vis-à-vis du vrillage de flux.

Par ailleurs, les pales de masquage selon l'invention sont calage variable, pour ajuster le degré de masquage aux conditions de vol. Ainsi, comme représenté sur la figure 5, chaque pale 2 est montée sur la roue 1 de manière à pouvoir pivoter autour d'un axe radial coïncidant avec son bord d'attaque 3, afin de modifier son angle de calage. Complémentairement, la roue 1 est alors équipée de moyens de commande non représentés qui pilotent le calage des pales 2.

Ainsi, et comme illustré schématiquement sur la figure 5, une modification de l'angle de calage des pales 2 permet par exemple d'augmenter temporairement la largeur apparente L des canaux inter-pales, pour favoriser le rendement du moteur au détriment de la furtivité.

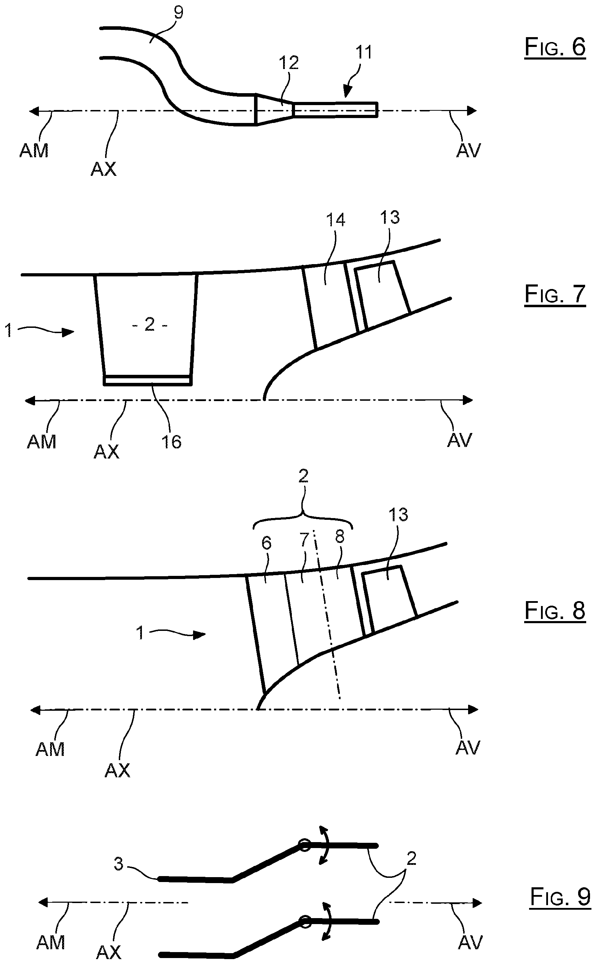

La roue de masquage 1 est avantageusement agencée en amont d'une première roue mobile de compresseur dans une architecture de système de propulsion telle que représentée sur la figure 6, c'est-à-dire comprenant une manche d'entrée coudée 9 raccordée à un turboréacteur 11 comprenant un compresseur 12, pour alimenter ce turboréacteur 11 en air.

Comme visible plus en détail sur la figure 7, le compresseur basse pression 12 comporte une première roue mobile 13 aubagée à l'amont de laquelle est agencée une roue directrice d'entrée 14 connue. Cette roue directrice d'entrée comporte des pales fixes axiales pour stabiliser l'écoulement fluide ayant traversé la manche d'entrée 9 avant qu'il ne traverse la première roue mobile 13.

La roue de masquage 1 selon l'invention est installée en amont de cette roue directrice 14 dans la manche d'entrée, pour réduire la réflexion sur la première roue mobile 13 des rayonnements électromagnétiques ayant pénétré dans la manche d'entrée 9.

Dans ce cadre, la roue masquante selon l'invention comporte un carter externe situé à l'entrée du turboréacteur et auquel les pales sont reliées par leurs sommets Sm, et une virole interne 16 à laquelle les pales sont reliées par leurs pieds Pd.

Selon un autre agencement représenté sur la figure 8, la roue de masquage selon l'invention est située immédiatement en amont de la première roue mobile 13 du compresseur, de façon à assurer conjointement les fonctions de roue de masquage et de roue directrice d'entrée pour le compresseur.

Avec cet autre agencement, les pertes de charge introduites par la roue de masquage sont réduites par le fait qu'elle remplace la roue directrice existante : le flux traversant le moteur est entièrement stabilisé par la roue masquante avant d'atteindre la première roue mobile du compresseur : ce sont alors les portions axiales aval 8 des pales de masquage qui assurent la fonction de la roue directrice d'entrée.

Dans un agencement ne faisant pas partie de l'invention, les pales 2 sont avantageusement en deux parties : une première partie fixe comportant la portion 6 amont et la portion centrale 7, et une deuxième partie à calage variable comportant la portion aval 8.

La deuxième partie constitue ainsi un volet à calage variable, apte à pivoter autour de son bord amont qui s'étend au niveau de la zone concave CCi de la paroi d'intrados Pi et de la zone convexe CVe de la paroi d'extrados Pe.

L'angle de calage du volet est alors commandé pour être ajusté en fonction des conditions de fonctionnement du moteur de manière à ajuster au mieux le redressement du flux avant admission dans le compresseur.

D'une manière générale, les pales sont dimensionnées pour optimiser le coefficient de masquage afin de réduire la signature radar, tout en maintenant une performance du compresseur suffisante. Ce dimensionnement consiste principalement à déterminer l'angle d'inclinaison de la portion oblique centrale, et la longueur de corde C de cette portion oblique, c'est-à-dire le coefficient de masquage et le pas relatif. En pratique, il apparait que les compromis de fonctionnement optimaux peuvent être obtenus pour une inclinaison de la portion oblique significativement inférieure à 30° et un pas relatif inférieur à 0,6.

Afin d'accroître la furtivité, les pales 2 peuvent avantageusement être couvertes d'un revêtement absorbant en partie les rayonnements électromagnétiques incidents.

Par ailleurs, l'invention a été décrite dans le contexte de la réduction de signature radar d'un turboréacteur, mais elle s'applique aussi bien à la réduction des émissions sonores d'un tel turboréacteur. Dans ce dernier cas, l'invention s'applique notamment à un moteur intégré à un empennage d'aéronef, encore appelé moteur enterré.

## Revendications

1. Roue aubagée (1) de masquage d'une roue mobile de turboréacteur, comportant des pales (2), chaque pale (2) comportant une paroi d'intrados (Pi) et une paroi d'extrados (Pe) réunies au niveau d'un bord d'attaque (3) et au niveau d'un bord de fuite (4) et s'étendant selon un axe d'envergure (EV) depuis un pied (Pd) jusqu'à un sommet (Sm), et dans laquelle :
- la paroi d'intrados (Pi) comporte une portion amont (6i) s'étendant du bord d'attaque (3) à une zone convexe (CVi) de cette paroi d'intrados (Pi), une portion centrale (7i) s'étendant de la zone convexe (CVi) à une zone concave (CCi) de cette paroi d'intrados (Pi), et une portion aval (8i) s'étendant de la zone concave (CCi) au bord de fuite (4) ;
- la paroi d'extrados (Pe) comporte une portion amont (6e) s'étendant du bord d'attaque (3) à une zone concave (CCe) de cette paroi d'extrados (Pe), une portion centrale (7e) s'étendant de la zone concave (CCe) à une zone convexe (CVe) de cette paroi d'extrados (Pe), et une portion aval (8e) s'étendant de la zone convexe (CVe) au bord de fuite (4) ;
- ces zones concaves (CCi, CCe) et ces zones convexes (CVe, CVi) s'étendent chacune sur la majorité de la hauteur de la pale (2) le long de son axe d'envergure (EV) ;
- la zone concave (CCi) de la paroi d'intrados (Pi) est en vis-à-vis de la zone convexe (CVe) de la paroi d'extrados (Pe), et la zone concave (CCe) de la paroi d'extrados (Pe) est en vis-à-vis de la zone convexe (CVi) de la paroi d'intrados (Pi) **caractérisée en ce que** chaque pale (2) est montée sur la roue aubagée (1) de manière à pouvoir pivoter autour d'un axe radial coïncidant avec son bord d'attaque (3) afin de modifier son angle de calage, et **en ce que** la roue aubagée (1) est équipée de moyens de commande qui pilotent le calage des pales

2. S-Roue aubagée selon la revendication 1, dans laquelle les pales (2) sont couvertes d'un revêtement absorbant les rayonnements électromagnétiques.

3. Turboréacteur comprenant un compresseur basse pression (12) incluant une roue mobile (13) en amont (AM) de laquelle est agencée une roue directrice d'entrée (14) en amont (AM) de laquelle est montée une roue aubagée de masquage (1) selon la revendication 1.

4. Turboréacteur comprenant un compresseur basse pression (12) incluant une roue mobile (13) en amont de laquelle est agencée une roue aubagée de masquage (1) selon la revendication 1.

## Patentansprüche

1. Maskierendes Schaufelrad (1) eines mobilen Laufrads eines Turbostrahltriebwerks, bestehend aus Schaufelblättern (2), wobei jedes Schaufelblatt (2) eine Innenwand (Pi) und eine Außenwand (Pe) umfasst, die an einer Vorderkante (3) und einer Hinterkante (4) miteinander verbunden sind und sich entlang einer Spannweitenachse (EV) von einem Fuß (Pd) bis zu einem Scheitelpunkt (Sm) erstrecken, und wobei:
- die Innenwand (Pi) einen vorgelagerten Abschnitt (6i), der sich von der Vorderkante (3) bis zu einer konvexen Zone (CVi) dieser Innenwand (Pi) erstreckt, einen zentralen Abschnitt (7i), der sich von der konvexen Zone (CVi) bis zu einer konkaven Zone (CCi) dieser Innenwand (Pi) erstreckt, und einen nachgelagerten Abschnitt (8i) aufweist, der sich von der konkaven Zone (CCi) bis zur Hinterkante (4) erstreckt;
- die Außenwand (Pe) einen vorgelagerten Abschnitt (6e), der sich von der Vorderkante (3) bis zu einer konkaven Zone (CCe) dieser Außenwand (Pe) erstreckt, einen zentralen Abschnitt (7e), der sich von der konkaven Zone (CCe) bis zu einer konvexen Zone (CVe) dieser Außenwand (Pe) erstreckt, und einen nachgelagerten Abschnitt (8e) aufweist, der sich von der konvexen Zone (CVe) bis zur Hinterkante (4) erstreckt;
- diese konkaven Zonen (CCi, CCe) und diese konvexen Zonen (CVe, CVi) sich jeweils über den Großteil der Höhe der Schaufelblätter (2) und seiner Spannweitenachse (EV) erstrecken;
- die konkave Zone (CCi) der Innenwand (Pi) gegenüber der konvexen Zone (CVe) der Außenwand (Pe) liegt, und die konkave Zone (CCe) der Außenwand (Pe) gegenüber der konvexen Zone (CVi) der Innenwand (Pi) liegt,
**dadurch gekennzeichnet, dass** jedes Schaufelblatt (2) derart auf dem Schaufelrad (1) montiert ist, dass es um eine mit seiner Vorderkante (3) zusammenfallende Radialachse schwenken kann, um seinen Einstellwinkel zu verändern, und dadurch, dass das Schaufelrad (1) mit einer Steuereinrichtung ausgestattet ist, die die Einstellung der Schaufelblätter (2) steuert.

2. Schaufelrad nach Anspruch 1, wobei die Schaufelblätter (2) mit einer Beschichtung versehen sind, die elektromagnetische Strahlung absorbieren.

3. Turbostrahltriebwerk, umfassend einen Niederdruckverdichter (12), der ein Laufrad (13) enthält, dem ein Einlassleitrad (14) vorgelagert (AM) angeordnet ist, dem ein maskierendes Schaufelrad (1) nach Anspruch 1 vorgelagert (AM) angeordnet ist.

4. Turbostrahltriebwerk, umfassend einen Niederdruckverdichter (12), der ein Laufrad (13) enthält, dem ein maskierendes Schaufelrad (1) nach Anspruch 1 vorgelagert angeordnet ist.

## Claims

1. A bladed wheel (1) for masking a moving wheel of a turbojet engine, including vanes (2), each vane (2) including a lower surface wall (Pi) and an upper surface wall (Pe) joined at a leading edge (3) and at a trailing edge (4) and extending along a span axis (EV) from a root (Pd) to a tip (Sm), and wherein:
- the lower surface wall (Pi) includes an upstream portion (6i) extending from the leading edge (3) to a convex zone (CVi) of this lower surface wall (Pi), a central portion (7i) extending from the convex zone (CVi) to a concave zone (CCi) of this lower surface wall (Pi), and a downstream portion (8i) extending from the concave zone (CCi) to the trailing edge (4);
- the upper surface wall (Pe) includes an upstream portion (6e) extending from the leading edge (3) to a concave zone (CCe) of this upper surface wall (Pe), a central portion (7e) extending from the concave zone (CCe) to a convex zone (CVe) of this upper surface wall (Pe), and a downstream portion (8e) extending from the convex zone (CVe) to the trailing edge (4);
- these concave zones (CCi, CCe) and these convex zones (CVe, CVi) each extend over most of the height of the vane (2) along its span axis (EV);
- the concave zone (CCi) of the lower surface wall (Pi) faces the convex zone (CVe) of the upper surface wall (Pe), and the concave zone (CCe) of the upper surface wall (Pe) faces the convex zone (CVi) of the lower surface wall (Pi).
**characterized in that** each vane (2) is mounted to the bladed wheel (1) so as to be able to pivot about a radial axis coinciding with its leading edge (3), in order to change its setting angle, and **in that** the bladed wheel (1) is equipped with control means which control setting of the vanes (2).

2. The bladed wheel according to claim 1, wherein the vanes (2) are covered with a coating absorbing electromagnetic radiations.

3. A turbojet engine comprising a low pressure compressor (12) including a moving wheel (13) upstream (AM) of which an inlet steering wheel (14) is arranged, upstream (AM) of which a masking bladed wheel (1) according to claim 1 is mounted.

4. A turbojet engine comprising a low pressure compressor (12) including a moving wheel (13) upstream of which a masking bladed wheel (1) according to claim 1 is arranged.
